# EUROPEAN PATENT SPECIFICATION

(11) **EP 0 929 375 B1**
(45) Date of publication and mention of the grant of the patent: **13.11.2002**
(21) Application number: 97943255.6
(22) Date of filing: 19.09.1997
(51) Int. Cl.: B23K 20/12

(54) **APPARATUS FOR FRICTION STIR WELDING**
VORRICHTUNG ZUM OSZILLIERENDEN REIBSCHWEISSEN
APPAREIL DE SOUDAGE PAR FRICTION A MOUVEMENT CYCLIQUE

(30) Priority: 25.09.1996 SE 9603500
(43) Date of publication of application: 21.07.1999
(73) Proprietor: Esab AB, 402 77 Göteborg (SE)
(72) Inventor: LARSSON, Rolf, S-695 31 Laxa (SE)
(74) Representative: Lindberg, Klas Valter Bo
(86) International application number: SE9701577
(87) International publication number: WO98013167

(56) References cited:
- WO-A-93/10935
- WO-A-95/26254

## Description

The present invention relates to an apparatus for friction stir welding, comprising a welding assembly, a work-table supporting the workpiece or workpieces to be welded, and at least one clamping means for clamping the workpieces to one another and/or to the work-table or the workpiece to the work-table, respectively, during the welding operation.

The definition friction stir welding designates a welding method according to which the workpieces to be joined together are plasticized along their joint line by supply of frictional heat from a rotating welding probe which is caused to move along the joint between the workpieces while at the same time being pressed against the workpieces. As described in WO93/10935 and WO95/26254 the welding probe should be manufactured from material harder than the workpieces, and during the welding operation the workpieces should be securely fixed relative to one another and to the work-table. In this respect this technique differs from that of conventional friction welding according to which the frictional heat is generated by the relative motion of the workpieces as they are being pressed together, i.e. the frictional heat is generated only by the two components to be joined together. This welding technique according to the above-mentioned publications is used for the welding of different mate-materials, such as plastics, metals, etcetera in various fields of application, for example to interconnect workpieces, to repair cracks in a workpiece, and so on. The configuration of the welding probe is conditioned e.g. by the material to be welded and by the intended application.

In the manufacture of ships, railway cars, bridges, oil platforms and so on extruded aluminium or aluminium alloy profile sections are of interest as building components in view of their corrosion resistance, light weight, etcetera. Because the dimensions of the profile sections produced today by the extruding technique are comparatively small and because the welding methods used at present for joining together aluminium profile sections fail to provide a wholly satisfactory result with respect to strength, finish, and deformation, aluminium has not gained but restricted use, despite the above-mentioned advantages that this material possesses.

By instead using the friction stir welding technique a welding joint is produced the bottom face of which has a fine and smooth finish, with resulting few points of load concentration. In addition, the strength of the joint produced by this joining method is almost equal to that of the basic material. One problem encountered when using the welding technique according to the above patent application to join together aluminium profile sections is that in principle, the welding probe must extend all the way through the joint between the workpieces to be welded together in order to ensure that the resulting joint will extend from the top faces of the workpieces to the bottom faces thereof. However, because it is plasticized during the welding operation, the aluminium will adopt the same appearance as the top face of the work-table, with the result that any groove formed in the work-table top face would appear as projections in the bottom face of the panel. In order to produce a through joint, the welding probe must in principle extend vertically through the entire joint, with associated considerable risks that the top face of the work-table will come into contact with the welding tool and in doing so receive superficial damages, e.g. in the form of grooves. In order to avoid damage to the top face while at the same time ensuring that the resulting joint in principle is a through joint the distance from the welding probe to the work-table, particularly the top face thereof, must be kept at a minimum. The acceptable distance from the lower end of the welding probe to the top face of the work-table is conditioned on the material to be welded together, and in the case of e.g. an aluminium alloy of type designation 5083 the distance amounts to about 0.2 mm, with a tolerance of approximately ± 0.1 mm.

On account of the small dimensions of this distance the tolerance range with respect to the variations in thickness of the aluminium profile section may exceed this distance in some applications, with the result that along certain passages the formed joint ceases to be a through joint and that along certain passages of the joint the produced panel exhibits non-desirable protrusions on its bottom face owing to undesirable grooving of the top face of the work-table. It is likewise difficult to produce the components incorporated in a friction stir welding apparatus to a sufficient degree of rigidity to ensure that the forces involved in the welding operation do not cause the components to bend outwards to a degree exceeding the acceptable distance tolerance range. This condition is particularly difficult to achieve when comparatively large workpieces having a length exceeding approximately 4 m and a width of approximately 0.5 m are to be welded together.

One object of the present inventions thus is to produce an apparatus for friction stir welding. This apparatus allows two workpieces to be welded together in such a manner that the joint in the end product in principle is a through joint and is smooth and even, also on the face of the workpieces that abutted against the work-table during the welding operation, in order to ensure that the resulting joint has a high degree of strength. This object is to be achieved also in the case of welding-together of comparatively large workpieces and/or workpieces exhibiting a certain variation in thickness.

This object is achieved in accordance with the subject invention by means of an apparatus for friction stir welding of the kind defined in the introduction and which is characterised in that it also comprises a device for adjusting the position of the welding assembly vertically, i.e. in the height direction, relative to the work-table during the welding assembly movement in the longitudinal direction of the welding joint formed during the welding operation, in order to provide an optimum distance between the work-table and the welding assembly.

Because said apparatus also includes a device for adjusting the position of the welding assembly vertically relative to the work-table during the welding operation, it becomes possible to maintain an optimum distance from the welding assembly to the work-table during the entire welding operation, despite variations in thickness of the workpieces and/or unsatisfactory rigidity of the apparatus components, such that a joint which in principle is a through joint having a smooth and even bottom face is produced at all times.

The device for adjusting said distance preferably consists of a measuring device for measuring any changes of the distance in the heigt direction between the welding probe and the work-table that arises during the welding, and of a height adjustment device for setting the position of the welding assembly relative to the work-table as a function of said distance changes.

For instance, the measuring device is arranged to measure said distance changes by measuring the distance between the welding assembly and a measuring beam which is connected neither to the welding assembly nor to the work-table.

The measuring device may for instance be carried by a measuring carriage which is connected to an in principle rigid or not entirely rigid work-table and which is arranged to measure said distance changes by measuring the distance to a reference element disposed on the welding assembly.

For example, the measuring device is arranged to measure said distance changes by successively measuring the distance vertically from the welding assembly to the work-table, the measuring device preferably consisting of a laser distance meter which is mounted on the welding assembly.

The measuring device may be arranged to measure said distance changes by measuring the changes in thickness of said workpiece or workpieces in said longitudinal direction, in combination with measuring distance changes in the height direction between the welding assembly and the workpiece/ workpieces that arise during the welding. In this case the measuring device preferably consists of a thickness meter and of a unit for successively measuring and/or registering distance changes between the welding assembly and the workpiece/workpieces.

The thickness meter may be arranged in connection with the welding assembly and consist of an ultrasonic meter, or be arranged separate from the welding assembly.

The above unit could consist of a measuring means, such as a laser distance meter, mounted on the welding assembly.

The above unit could consist of a registering means connected to the height adjustment device and arranged to follow the top faces of the workpieces or the top face of the workpiece during the welding.

The registering means may be a guide roller.

The measuring device could for example be connected to the above mentioned clamping means and the clamping means and the welding assembly be arranged so as to carried by a common support, in which case the thickness meter and the measuring unit may consist of a common measuring device, such as a position sensor.

Said device preferably adjusts the position of the welding assembly relative to the top face of the work-table.

The invention will be described in closer detail in the following with reference to the accompanying drawings illustrating various embodiments of the apparatus in accordance with the invention.

In the drawings:
Fig. 1 is a lateral view of a first embodiment of an apparatus for friction stir welding in accordance with the invention.
Fig. 2a is a view on an enlarged scale of a welding probe forming part of said apparatus.
Fig. 2b is a transverse sectional view on an enlarged scale of a height adjustment device forming part of the apparatus.
Fig. 3 is a lateral view of a second embodiment of said apparatus.
Fig. 4 is a lateral view of a third embodiment of said apparatus.
Fig. 5 is a lateral view of a fourth embodiment of said apparatus.
Fig. 6 is front view of a fifth embodiment of said apparatus.
Fig. 7 is a lateral view of a sixth embodiment of said apparatus.

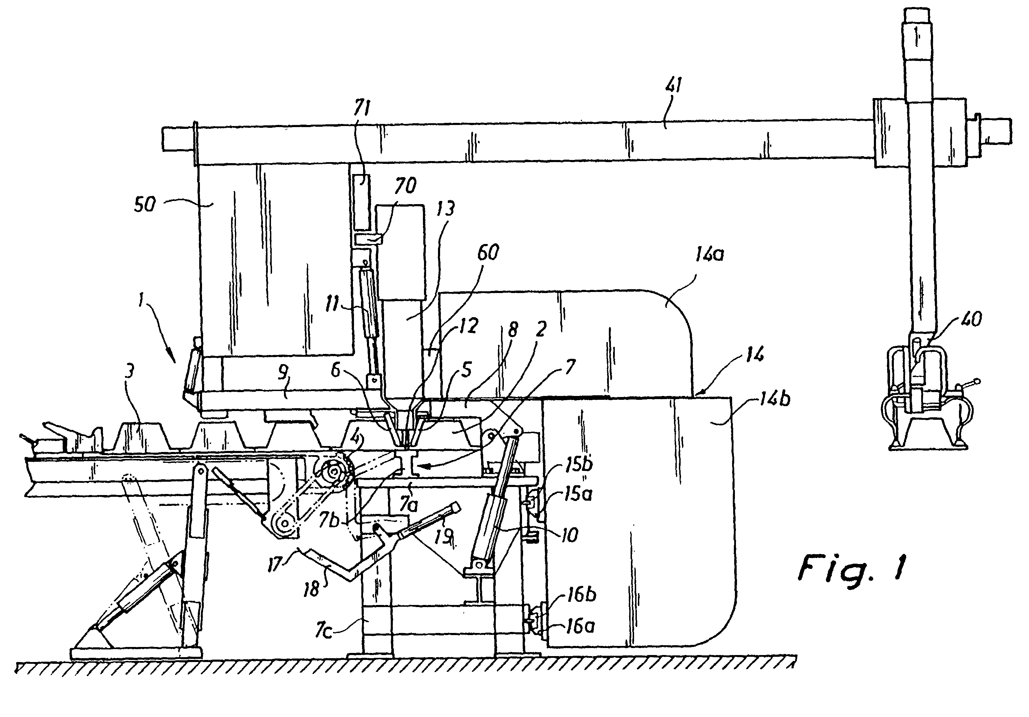

The plant 1 illustrated in Fig. 1 is adapted to be used to weld together extruded aluminium profile sections 1 in order to form an aluminium panel 3. The expression aluminium is used herein to designate either pure aluminium or an alloy of aluminium and another metal, such as magnesium. The number of aluminium profile sections to be welded together is determined by the width of the profile section in question, which could for example have a width of 300 mm and a length of 12 m, and by the requested width of the finished panel. The manufacture is effected by welding a fresh aluminium profile section to the right-hand marginal edge of the immediately preceding profile section, as illustrated in Fig. 1, this immediately preceding profile section in turn having previously been welded to the right-hand marginal edge of the preceding profile section. In other words, the width of the aluminium profile section being manufactured increases by the width of one profile section in each separate welding operation.

In accordance with the example shown in Fig. 1 the plate 3 being manufactured is increased by one aluminium profile section 2, consisting, at the end of the ongoing welding operation, of five aluminium profile sections. After welding, the plate is displaced to the left as seen in Fig. 1 by an intermittently operating chain conveyor 14, over a distance corresponding to the width of the profile section in question. At the same time a fresh aluminium profile section is entered by means of infeed means 40 which are arranged for displacement along beams 41. The latter are securely connected to the machine frame 50 of the apparatus.

During the welding operation, the aluminium profile section 2 and the semi-finished aluminium panel 3 are held together and secured to the work-table 7 by clamping means 5 and 6, respectively. The clamping means 5 and 6, respectively, consist of triangularly shaped pressure members which via arms 8 and 9, respectively, are urged into a position of engagement with the respective workpieces 2, 3 during the welding operation, by means of pressure cylinder units 10 and 11, respectively. The pressure cylinders 10 and 11 are connected to the work-table 7 and to the machine frame 50, respectively. The clamping means are arranged in pairs in facing relationship along the edges of the joint between the workpieces. The spacing between the centre lines of two neighbouring pairs amounts to approximately 500 mm in the subject example. Owing to the reduced space available, each pressure member 5 is driven by a separate pressure cylinder 10 whereas two neighbouring pressure members 6 are driven by a common pressure cylinder 11 via the arm 9. For this purpose, the arm has a U-shaped configuration, the pressure members being attached to the legs of the U-shaped arm and the pressure cylinder to the web thereof. In this case the work-table consists of a stationary, horizontal machine table 7a on which a backing bar 7b is fixedly mounted.

The joint between the profile section 2 and the plate 3 is positioned in alignment with the centre line of the backing bar. The positioning of the workpieces not directly on the machine table but on the backing bar interposed between the table and the workpiece is a pure safety measure, it being a great deal more convenient to replace the comparatively smaller backing bar than the entire machine table, should the top face thereof be subjected to damage during the manufacture of the panel. Aluminium is a very soft metal and the plasticisation during the welding operation will cause it to adopt an identical configuration to that of the top face of the backing bar, and consequently any depressions in that top face would be reproduced in the form of protruding formations on the bottom face of the panel. The finished aluminium panel thus would fail to meet laid-down quality standards.

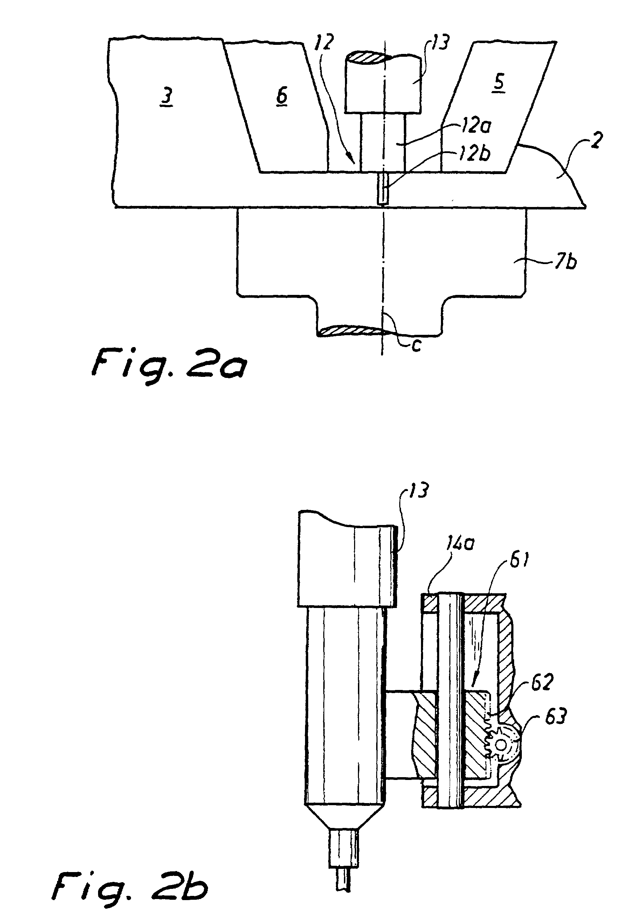

Welding is performed by means of a welding assembly in the form of a welding probe 12 and a rotating spindle 13. As seen from Fig. 2a, the welding probe consists of a cylindrical body 12a having attached thereto a cylindrical probe pin 12b the circumference of which is smaller than that of the probe body. Owing to this arrangement the lower part of the cylindrical body will project beyond the upper part of the pin. In the following, the lower part of the body will be referred to as the shoulder of the body and as appears from this drawing figure the shoulder abuts against the upper faces of the panel 3 and of the profile section in the normal position of the welding probe. The welding probe body and pin could be configured for example in the manner appearing from any one of the embodiments shown in WO93/10935 or WO95/26254. The upper part of the body 12a is connected to the rotating spindle 13 which is driven by a drive unit, not shown, such as a drive motor. In turn, the spindle is supported by a runner 14 by means of the height adjustment device 60. The runner 14 comprises an upper part 14a and a lower part 14b, the upper part being so connected to a lower part is to be displaceable laterally relative to the latter. The runner travels along the workpieces 2 and 3, driven by a drive unit, not shown. In order to ensure that the welding probe will be placed in the same position relative to the edges of the joint of the workpieces along the entire joint, the runner 14 is connected to the work-table 7 via two guide shoes 15a and 16a, each travelling along the respective one of work-table mounted guide rails 15b and 16b. This arrangement provides a rectilinear movement relative to the work-table.

Fig. 1 also shows a spacer element 17 which is fixedly secured to holders 18. A pressure cylinder unit 19 displaces each holder from an idle position (shown in continuous lines), in which position the spacer element is spaced from the backing bar, to a position of engagement (in dash and dot lines), in which the spacer element is positioned on top of the backing bar. In this position the spacer element extends alongside the entire backing part and consequently the number of holders will be determined by the length of the backing bar, which in this case amounts to about 16 meter, and in the shown example six holders are provided.

As appears from Fig. 2b the height adjustment device 60 consists of a regulator means, not shown, arranged to regulate the setting of the spindle vertically relative to the upper part 14a of the runner by means of a setting unit 61. The latter could consist e.g. of a spindle-mounted rack 62 and a pinion 63 mounted on the upper part 14a and driven by a servo-motor, not shown in this drawing figure.

As also appears from Fig. 1, a measuring device 70 is fixedly mounted on the upper part of the spindle 13. This measuring device could consist e.g. of a laser distance meter. A stationary cantilever-mounted measuring beam 71 which is carried by separate supports and extends above the entire work-table in the longitudinal direction thereof, is used as a reference means for the measuring device 70, the latter being positioned vertically below the measuring beam. By successively measuring, during the welding, the distance from the measuring device to the measuring beam, which is unaffected by the friction stir welding operation, a measurement is obtained representative of the changed position, in the direction of movement of the welding assembly, of the spindle and of the welding probe connected to the spindle relative to the top face of the work-table 7. The expression successively measuring is intended herein to define a continuous or intermittent measuring process. The changed position vertically of the welding probe, caused by the deflection outwards of the welding assembly in response to the forces involved in the welding operation proper, may then be measured. The measuring device 70 is connected to the regulating means of the height adjustment device 60 for transmission to the setting unit 61 of the measured changes in distance in the form of an actuating signal. The condition therefor is that the entire work-table, including the machine table, may be made completely rigid preventing it from being bent outwards by said forces but instead ensuring that it assumes the same position during the entire welding operation. The measured change of the distance between the measuring device and the measuring beam consequently corresponds to the distance changes between the outer end of the welding probe pin 12b and the top face of the work-table.

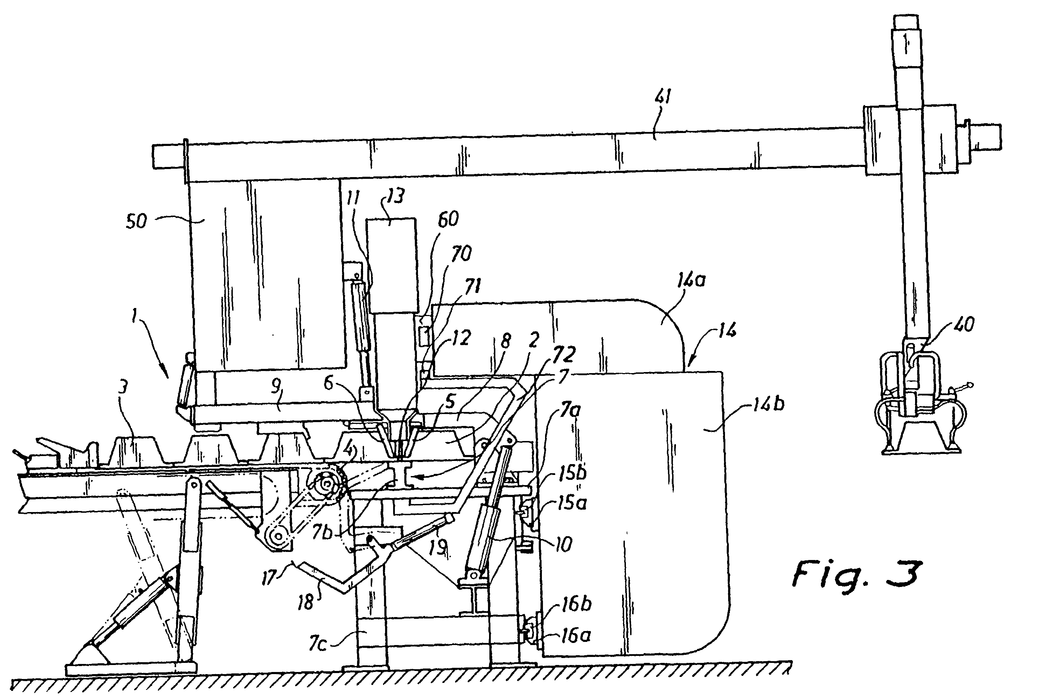

According to the arrangement in Fig. 3 the measuring beam 71 is no longer supported in a cantilever fashion but is instead arranged in connection with the backing bar 7b by means of a number of holders 72, said holders being connected at one of their ends to the not entirely rigid machine table 7a straight below the holding bar and securely attached at their opposite ends to the measuring beam. In accordance with this embodiment the measuring device 70 is mounted on the height adjustment device 60 straight above the measuring beam. The measuring beam is manufactured from a yielding material, and therefore reflects the deflections of the backing bar caused by the forces involved in the welding operation. By measuring the change in distance relative to the measuring bar the measuring device thus measures the total change of the distance from the outer end of the welding probe pin 12b to the top face of the work-table arising during the welding in response to the deflecting outwards of the welding probe as well as of the work-table.

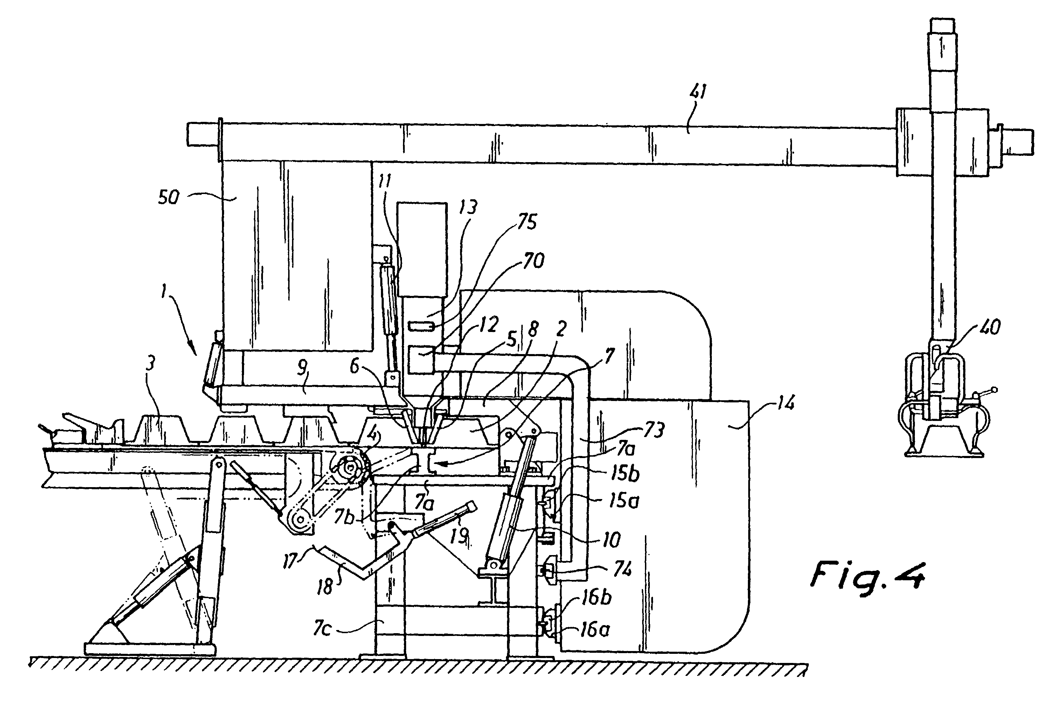

In Fig. 4 the measuring beam is replaced by a measuring carriage 73 which is displaceable along the work-table in a guide rail 74, the latter being securely mounted on the work-table frame 7c. The guide rail is mounted in parallel with the guide rails 15b and 16b of the runner. The measuring carriage is displaced by the same drive unit as the runner in the longitudinal direction of the welding joint being formed during the welding and it is positioned ahead of said joint in the direction of movement of the welding assembly. The measuring device 70 is supported by the measuring carriage 73 and measures the change in distance relative to a reference element in the form of a plate 75 which is fixedly mounted on the spindle 13. Because the measuring carriage is disposed on the rigid frame of the work-table, the measuring carriage will not absorb the outwards deflections of the machine-table arising during the welding and therefore in principle will measure only the deflections outwards of the welding probe. Like in the case of the embodiment of Fig. 1 the arrangement is conditioned on the machine table being entirely rigid.

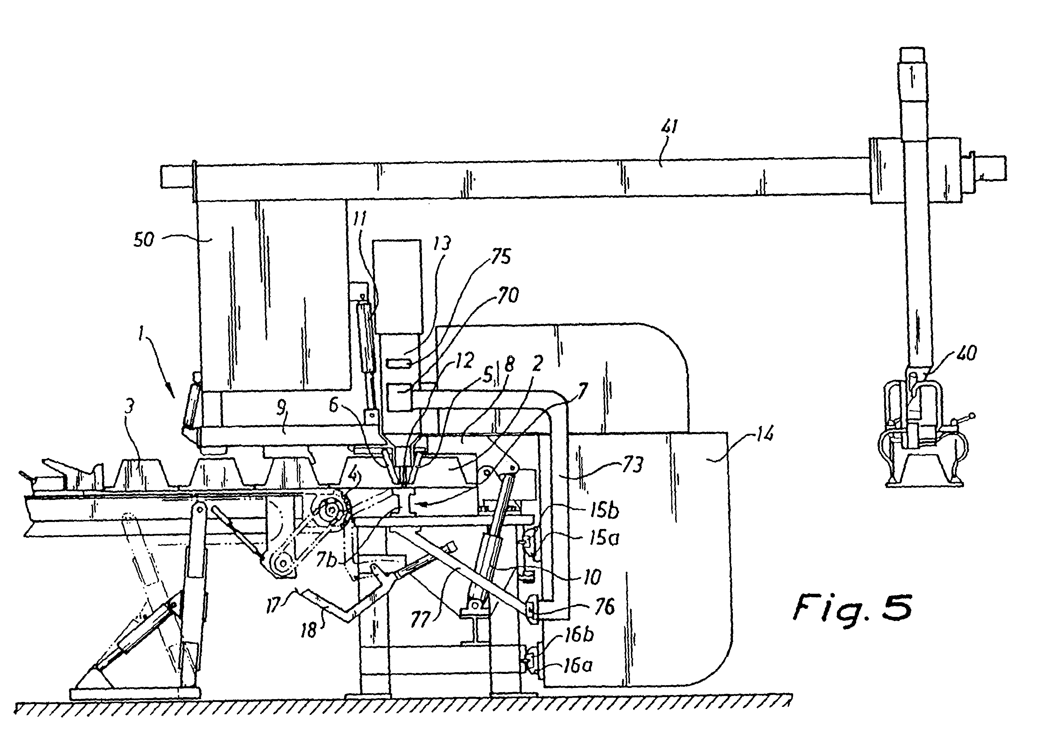

According to the arrangement of Fig. 5, the measuring carriage instead travels along a yieldable guide rail 76 which is connected to the machine-table 7a by means of a number of arms 77. By means of one of its ends each arm is securely attached to the machine-table 7a straight beneath the backing bar 76 and by means of its opposite end it is securely attached to the guide rail 76. The guide rail and consequently the measuring carriage thus will reflect the deflections outwards of the backing bar. Like in the embodiment of Fig. 3 the measuring device 70 measures the total change of the distance between the outer end of the welding probe pin 12b and the upper face of the backing bar, caused by said outwardly deflecting movements.

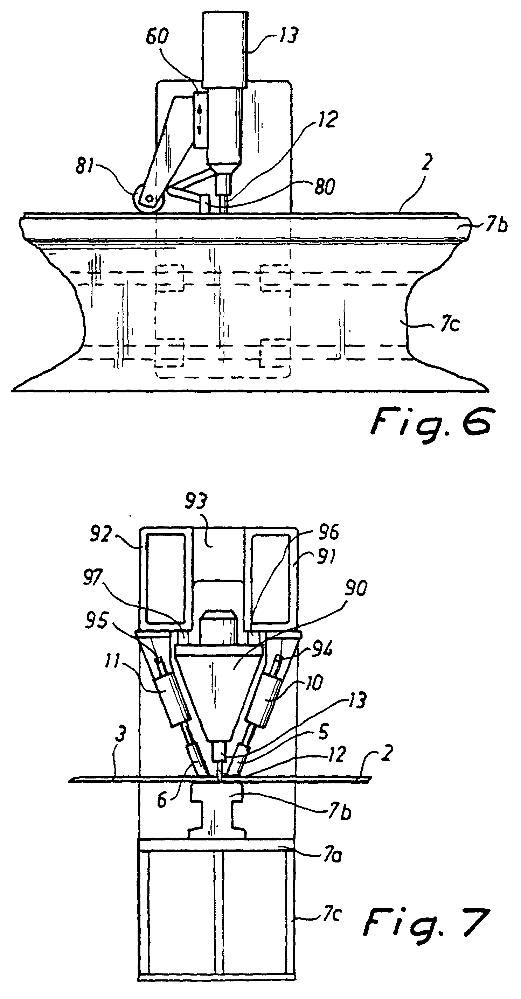

Fig. 6 shows another embodiment, according to which the spindle 13 and the welding probe 12 securely attached thereto are floating, i.e. the position vertically of the welding assembly is determined by the configuration of the outline of the upper faces of the aluminium panel 3 and of the aluminium profile section 2. In this case the measuring device is a unit which successively registers the distance between said top faces and the shoulder of the welding probe 12, and a thickness meter 80, such as an ultrasonic meter. The thickness meter is mounted on the lower part of the spindle 13 and like the unit it is positioned ahead of the latter in the direction of movement of the welding assembly . In this case the unit consists of a registering means in the shape of a guide roller 81 which is connected to the height adjustment device 60 and which follows the configuration of the top faces of the work pieces on either side of the joint, thus urging the shoulder of the welding probe body 12a into abutment against these top faces during the entire welding operation. Should the work-table flex outwards when exposed to the forces involved in the welding operation this fact is registered by the guide roller and the welding probe position will be adjusted accordingly relative to said position by means of the height adjustment device 60 in such a manner that the shoulder will abut continuously against the upper faces of the work pieces. Since also the thickness of the work pieces may vary, the distance between the outer end of the welding probe pin 12b and the upper face of the backing bar 7b will vary, should the welding probe position be adjusted by means of the guide roller only. In order to avoid this situation, the thickness is measured successively by means of the thickness meter 80 which like the guide roller emits signals to the height adjustment device regulator 61. In response to these signals the regulator controls the welding assembly position by means of the setting unit 62, ensuring that the distance from the outer end of the pin to the upper face of the backing bar will be maintained within the desirable distance interval which is in the range of about 0.2 mm ± 0.1 mm in the case of aluminium alloy of type 5083. Owing to this arrangement the shoulder of body 12a will not abut against the upper faces of the workpieces during the entire welding operation in case of varying thicknesses.

Fig. 7, finally, shows an entirely different embodiment, according to which the welding probe 12 and the spindle 13 are supported by a welding carriage 90 travelling along two beams 91, 92 which are disposed above the work-table and which are interconnected by means of an intermediary beam 93. As further appears from the drawing figure the pressure cylinders 10 and 11 respectively, of the clamping means 5 and 6 are likewise supported by the beams 91 and 92, respectively. In this case the thickness meter and the unit for successively measuring distance changes between the lower end of the welding probe 12 and the upper faces of the workpieces 2, 3 form a common measuring means in the form of a number of position sensors 94, 95, the latter being arranged in connection with the piston rods of the pressure cylinders. The number of position sensors is conditioned on the required measurement precision and could vary from two for each apparatus to one for each pressure cylinder. Calibrating measuring operations performed directly on the upper face of the backing means, i.e. in the absence of workpieces, in this case forms the basis for measuring said distance changes. The position sensors transmit the measured distance changes to the height setting means 96 and 97, respectively, arranged between the welding carriage 90 and the beams 91 and 92 and being of the type illustrated in Fig. 2b.

When a predetermined number of aluminium profile sections are to be welded together to form an aluminium plate of desired size, two aluminium profile sections are initially clamped in the plant 1 by means of the clamping means 5, 6 while ensuring that the air gap between the facing marginal edges of the profile sections does not exceed the size that is prone to produce a deficient joint. As appears from Fig. 2a, the gap is located in alignment with the centre line c of the backing bar 7b. The critical gap width varies according to the thickness of the sheet-metal of the profile sections concerned, and in the case of a sheet-metal thickness of about 6 mm the critical gap size is approximately 1 mm. The welding operation is then initiated by causing the welding probe to rotate at a certain speed while at the same time it is displaced along the gap at a predetermined speed. As described in the introduction, the marginal edges of the profile sections will become plasticized while at the same time being pressed together. The forces involved in the welding operation, e.g. the pressure forces generated by the clamping means, will produce an outwards deflection of the components of the apparatus, such as its welding assembly and/or its work-table. In addition, the thickness of the workpieces may vary. In order to nonetheless maintain an essentially constant distance from the outer end of the welding probe 10 to the upper face of the backing bar, a distance which is very small in comparison with the dimensions of the workpieces involved, these distance changes are measured by any one of the measuring devices illustrated in the drawings figures, all of which are positioned ahead of the welding probe in the direction of movements of the welding assembly but in close vicinity thereto, in order to ensure that the measured values will be as precise as possible in order that any measurement deviations will clearly be below the above-mentioned tolerance range. These measurement values are then transmitted to the regulating means of the height adjustment device, said regulating means setting the welding assembly by means of the setting unit, ensuring that the desired optimum distance to the upper face of the work-table will be obtained along the entire joint during the entire welding operation.

After solidifying of the joint a homogeneous high-strength welding seam thus has been formed. When the welding probe 12 has travelled along the entire joint and the individual welding operation thus is completed, the pressure cylinders 10 and 11 are activated, thus deactivating the clamping means 5 and 6. Consequently the aluminium panel 13 just formed is released from the work-table 7 and will be transported by the chain conveyor 4 to the left as seen in Fig. 1 over a distance corresponding to the width of one aluminium profile section, allowing the panel to be welded in the manner just described to a fresh aluminium profile section 2 which is supplied by means of infeed means 40.

It should be appreciated that the invention is not limited to the above-described embodiments but could be modified in a variety in different ways within the scope of the appended claims. For example, the measuring device 70 in accordance with Figs 1 or 3, could be mounted on the upper part 14a of the runner instead of on the spindle 13. The measuring device 70 could for instance consist of a laser distance meter which is mounted directly on the spindle 13 and which successively, during the welding operation, measures the vertical distance from the lower end of the welding probe 12 to the upper face of the backing bar 7b. In this case, the laser beam is emitted to pass through the air gap separating the workpieces or, in cases when the air gap is very narrow, through special measuring recesses formed along the joint between the workpieces. Instead of the unit in accordance with Fig. 6 being a registering means it could instead be a measuring means in the form of a laser distance meter which is mounted on the spindle 13. Thickness measurements could also be taken prior to the welding process proper by measuring the aluminium profile section thickness by means of an electronic sliding calliper arranged adjacent the infeed means, prior to the infeed to the welding assembly. The welding carriage and the clamping means in accordance with Fig. 7 could of course be supported by different beams instead of by the same ones, in which case the thickness meter and the measuring unit must consists of two separate measuring means. Instead of the triangularly shape pressure members being pressed into engagement with their associated workpieces 2 and 3, respectively, by means of a pressure cylinder 10 and 11, respectively, they could be pressed into engagement with these means by means of pressure rollers. Obviously, it is quite possible to use the apparatus for welding together workpieces of other metals or metal alloys than aluminium, such as e.g. titanium or steel. As a rule, the plant is used to weld two workpieces together, such as a semi-finished aluminium panel and a fresh aluminium profile section, but it could equally well be used to repair cracks formed in a workpiece, such as a finished aluminium panel.

## Claims

1. An apparatus (1) for friction stir welding, comprising a welding assembly (12, 13), a work-table (7) supporting the workpiece or workpieces (2, 3) to be welded, and at least one clamping means (5, 6) for clamping the workpieces to one another and/or to the work-table, or the workpiece to the work-table, during the welding operation, **characterised in that** it also comprises a device for adjusting the position of the welding assembly (12, 13) in the height direction relative to the work-table (7) during the welding assembly movement in the longitudinal direction of the welding joint formed during the welding operation, in order to provide an optimum distance between the work-table and the welding assembly.

2. An apparatus as claimed in claim 1, **characterised in that** said device consists of a measuring device (70; 80; 81; 95, 94) for measuring changes in the distance in the height direction between the welding assembly (12, 13) and the working table (7), and of a height adjustment device (60; 96, 97) for setting the position of the welding assembly relative to the work-table as a function of said distance changes.

3. An apparatus as claimed in claim 2, **characterised in that** the measuring device (70) is arranged to measure said distance changes by measuring the distance between the welding assembly (12, 13) and a measuring beam (71) which is connected neither to the welding assembly nor to the work-table (7a).

4. An apparatus as claimed in claim 2, **characterised in that** the measuring device is arranged to measure said distance changes by measuring the distance between the welding assembly (12, 13) and a measuring beam (71) which is connected only to the working table (7a) .

5. An apparatus as claimed in claim 2, **characterised in that** the measuring device (70) is carried by a movable measuring carriage (73) which is connected to an in principle rigid work-table (7c) and which is arranged to measure said distance changes by measuring the distance to a reference element (75) disposed on the welding assembly (12, 13).

6. An apparatus as claimed in claim 2, **characterised in that** the measuring device (70) is carried by a movable measuring carriage (73), which is connected to a not entirely rigid work-table (7a), and which is arranged to measure distance changes by measuring the distance to a reference element disposed on the welding assembly (12, 13).

7. An apparatus as claimed in claim 2, **characterised in that** the measuring device (70) is arranged to measure said distance changes by successively measuring the distance in the height direction from the welding assembly (12, 13) to the work-table (7).

8. An apparatus as claimed in claim 7, **characterised in that** the measuring device (70) consists of a laser distance meter mounted on the welding assembly (12, 13).

9. An apparatus as claimed in claim 2, **characterised in that** the measuring device (80, 81) is arranged to measure said distance changes by measuring the changes in thickness of said workpiece or workpieces (2, 3) in said longitudinal direction, in combination with measuring such distance changes vertically that arise between the welding assembly (12, 13) and the workpiece/workpieces during the welding.

10. An apparatus as claimed in claim 9, **characterised in that** the measuring device consists of a thickness meter (80) and of a unit (81) for successively measuring and/or registering distance changes between the welding assembly (12, 13) and the workpiece/workpieces (2, 3).

11. An apparatus as claimed in claim 10, **characterised in that** the thickness meter (80) is arranged in connection with the welding assembly (12, 13).

12. An apparatus as claimed in claim 11, **characterised in that** the thickness meter is an ultrasonic meter (80).

13. An apparatus as claimed in claim 10, **characterised in that** the thickness meter is arranged separate from the welding assembly (12, 13).

14. An apparatus as claimed in any one of claims 10-13, **characterised in that** said unit is a measuring means mounted on the welding assembly (12, 13), such as a laser distance meter.

15. An apparatus as claimed in any one of claims 10-13, **characterised in that** said unit is a registering means (81) connected to the height adjustment device (60), said registering means arranged to follow the top faces of the workpieces (2, 3) or of the top face of the workpiece during the welding operation.

16. An apparatus as claimed in claim 15, **characterised in that** the registering means consists of a guide roller (81).

17. An apparatus as claimed in any one of claims 9-16, **characterised in that** the measuring device (94, 95) is connected to the above-mentioned clamping means (5, 6).

18. An apparatus as claimed in claim 17, **characterised in that** the clamping means (5, 6) and the welding assembly (12, 13) are arranged to be carried by a common support (91, 92, 93), the thickness meter and said unit forming one common measuring device, such as at least one position sensor (94, 95).

19. An apparatus as claimed in any one of the preceding claims, **characterised in that** said device adjusts the position of the welding assembly (12, 13) relative to the top face of the work-table (7).

## Patentansprüche

1. Vorrichtung (1) zum Reibrührschweißen mit einem Schweißgerät (12, 13), einem das Werkstück oder die Werkstücke (2, 3), das bzw. die geschweißt werden soll(en), stützenden Arbeitstisch (7) und mindestens einem Klemmittel (5, 6) zum Klemmen der Werkstücke aneinander und/oder an den Arbeitstisch oder des Werkstücks an den Arbeitstisch beim Schweißvorgang, **dadurch gekennzeichnet, daß** sie des weiteren eine Einrichtung zur Einstellung der Position des Schweißgeräts (12, 13) in Höhenrichtung bezüglich des Arbeitstisches (7) während der Bewegung des Schweißgeräts in Längsrichtung der beim Schweißvorgang gebildeten Schweißverbindung umfaßt, um einen optimalen Abstand zwischen dem Arbeitstisch und dem. Schweißgerät bereitzustellen.

2. Vorrichtung nach Anspruch 1, **dadurch gekennzeichnet, daß** die Einrichtung aus einer Meßeinrichtung (70; 80; 81; 95, 94) zur Messung von Änderungen des Abstands in Höhenrichtung zwischen dem Schweißgerät (12, 13) und dem Arbeitstisch (7) und aus einer Höheneinstelleinrichtung (60; 96, 97) zur Einstellung der Position des Schweißgeräts bezüglich des Arbeitstisches in Abhängigkeit von den Abstandsänderungen besteht.

3. Vorrichtung nach Anspruch 2, **dadurch gekennzeichnet, daß** die Meßeinrichtung (70) zur Messung der Abstandsänderungen durch Messen des Abstands zwischen dem Schweißgerät (12, 13) und einem weder mit dem Schweißgerät noch mit dem Arbeitstisch (7a) verbundenen Meßbalken (71) angeordnet ist.

4. Vorrichtung nach Anspruch 2, **dadurch gekennzeichnet, daß** die Meßeinrichtung zur Messung der Abstandsänderungen durch Messen des Abstands zwischen dem Schweißgerät (12, 13) und einem nur mit dem Arbeitstisch (7a) verbundenen Meßbalken (71) angeordnet ist.

5. Vorrichtung nach Anspruch 2, **dadurch gekennzeichnet, daß** die Meßeinrichtung (70) von einem beweglichen Meßschlitten (73) getragen wird, der mit einem im Prinzip starren Arbeitstisch (7c) verbunden und zur Messung der Abstandsänderungen durch Messen des Abstands zu einem am Schweißgerät (12, 13) angeordneten Bezugselement (75) angeordnet ist.

6. Vorrichtung nach Anspruch 2, **dadurch gekennzeichnet, daß** die Meßeinrichtung (70) von einem beweglichen Meßschlitten (73) getragen wird, der mit einem nicht vollständig starren Arbeitstisch (7a) verbunden und zur Messung von Abstandsänderungen durch Messen des Abstands zu einem am Schweißgerät (12, 13) angeordneten Bezugselement angeordnet ist.

7. Vorrichtung nach Anspruch 2, **dadurch gekennzeichnet, daß** die Meßeinrichtung (70) zur Messung der Abstandsänderungen durch aufeinanderfolgendes Messen des Abstands in Höhenrichtung vom Schweißgerät (12, 13) zum Arbeitstisch (7) angeordnet ist.

8. Vorrichtung nach Anspruch 7, **dadurch gekennzeichnet, daß** die Meßeinrichtung (70) aus einem am Schweißgerät (12, 13) angeordneten Laser-Abstandsmesser besteht.

9. Vorrichtung nach Anspruch 2, **dadurch gekennzeichnet, daß** die Meßeinrichtung (80, 81) zur Messung der Abstandsänderungen durch Messen der Dickenänderungen des Werkstücks oder der Werkstücke (2, 3) in Längsrichtung in Kombination mit dem Messen solcher Abstandsänderungen in Vertikalrichtung, die zwischen dem Schweißgerät (12, 13) und dem Werkstück/den Werkstücken beim Schweißen auftreten, angeordnet ist.

10. Vorrichtung nach Anspruch 9, **dadurch gekennzeichnet, daß** die Meßeinrichtung aus einem Dickenmesser (80) und einer Einheit (81) zum aufeinanderfolgenden Messen und/oder Erfassen von Abstandsänderungen zwischen dem Schweißgerät (12, 13) und dem Werkstück/den Werkstücken (2, 3) besteht.

11. Vorrichtung nach Anspruch 10, **dadurch gekennzeichnet, daß** der Dickenmesser (80) in Verbindung mit dem Schweißgerät (12, 13) angeordnet ist.

12. Vorrichtung nach Anspruch 11, **dadurch gekennzeichnet, daß** der Dickenmesser ein Ultraschallmesser (80) ist.

13. Vorrichtung nach Anspruch 10, **dadurch gekennzeichnet, daß** der Dickenmesser getrennt von dem Schweißgerät (12, 13) angeordnet ist.

14. Vorrichtung nach einem der Ansprüche 10 - 13, **dadurch gekennzeichnet, daß** die Einheit ein am Schweißgerät (12, 13) angebrachtes Meßmittel, wie zum Beispiel ein Laser-Abstandsmesser, ist.

15. Vorrichtung nach einem der Ansprüche 10 - 13, **dadurch gekennzeichnet, daß** die Einheit ein mit der Höheneinstelleinrichtung (60) verbundenes Erfassungsmittel (81) ist, welches so angeordnet ist, daß es den Oberseiten der Werkstücke (2, 3) oder der Oberseite des Werkstücks während des Schweißvorgangs folgt.

16. Vorrichtung nach Anspruch 15, **dadurch gekennzeichnet, daß** das Erfassungsmittel aus einer Führungsrolle (81) besteht.

17. Vorrichtung nach einem der Ansprüche 9 - 16, **dadurch gekennzeichnet, daß** die Meßeinrichtung (94, 95) mit dem obenerwähnten Klemmittel (5, 6) verbunden ist.

18. Vorrichtung nach Anspruch 17, **dadurch gekennzeichnet, daß** das Klemmittel (5, 6) und das Schweißgerät (12, 13) so angeordnet sind, daß sie von einer gemeinsamen Stütze (91, 92, 93) getragen werden, wobei der Dickenmesser und die Einheit eine gemeinsame Meßeinrichtung, wie zum Beispiel mindestens einen Weggeber (94, 95), bilden.

19. Vorrichtung nach einem der vorhergehenden Ansprüche, **dadurch gekennzeichnet, daß** die Einrichtung die Position des Schweißgeräts (12, 13) bezüglich der Oberseite des Arbeitstisches (7) einstellt.

## Revendications

1. Appareil (1) pour le soudage par friction-agitation comprenant un assemblage de soudage (12, 13), une table de fixation (7) supportant la pièce à usiner ou les pièces à usiner (2, 3) qui doivent être soudées, et au moins un moyen de serrage (5, 6) pour serrer les pièces à usiner l'une à l'autre et/ou à la table de fixation ou encore la pièce à usiner à la table de fixation, au cours de l'opération de soudage, **caractérisé en ce qu'**il comprend également un dispositif pour régler la position de l'assemblage de soudage (12, 13) en hauteur par rapport à la table de fixation (7) au cours du mouvement de l'assemblage de soudage dans la direction longitudinale du joint soudé obtenu au cours de l'opération de soudage, dans le but de procurer une distance optimale entre la table de fixation de l'assemblage de soudage.

2. Appareil selon la revendication 1, **caractérisé en ce que** ledit dispositif est constitué par un dispositif de mesure (70 ; 80 ; 81 ; 95 ; 94) pour mesurer des changements en ce qui concerne la distance en hauteur entre l'assemblage de soudage (12, 13) et la table de fixation (7) et par un dispositif de réglage de la hauteur (60 ; 96, 97) pour régler la position de l'assemblage de soudage par rapport à la table de fixation en fonction desdits changements en ce qui concerne la distance.

3. Appareil selon la revendication 2, **caractérisé en ce que** le dispositif de mesure (70) est arrangé pour mesurer lesdits changements en ce qui concerne la distance en mesurant la distance entre l'assemblage de soudage (12, 13) et un faisceau de mesure (71) qui n'est relié ni à l'assemblage de soudage, ni à la table de fixation (7a).

4. Appareil selon la revendication 2, **caractérisé en ce que** le dispositif de mesure est arrangé pour mesurer lesdits changements en ce qui concerne la distance en mesurant la distance entre l'assemblage de soudage (12, 13) et un faisceau de mesure (71) qui est relié uniquement à la table de fixation (7a).

5. Appareil selon la revendication 2, **caractérisé en ce que** le dispositif de mesure (70) est supporté par un chariot de mesure mobile (73) qui est relié à une table de fixation (7c) en principe rigide et qui est arrangé pour mesurer lesdits changements en ce qui concerne la distance en mesurant la distance par rapport à un élément de référence (75) disposé sur l'assemblage de soudage (12, 13).

6. Appareil selon la revendication 2, **caractérisé en ce que** le dispositif de mesure (70) est supporté par un chariot de mesure mobile (73) qui est relié à une table de fixation (7a) qui n'est pas complètement rigide, et qui est arrangé pour mesurer des changements en ce qui concerne la distance en mesurant la distance par rapport à un élément de référence disposé sur l'assemblage de soudage (12, 13).

7. Apparition revendication 2, **caractérisé en ce que** le dispositif de mesure (70) est arrangé pour mesurer lesdits changements en ce qui concerne la distance en mesurant de manière successive la distance en hauteur entre l'assemblage de soudage (12, 13) et la table de fixation (7).

8. Appareil selon la revendication 7, **caractérisé en ce que** le dispositif de mesure (70) est constitué d'un dispositif de mesure de la distance à faisceau laser monté sur l'assemblage de soudage (12, 13).

9. Appareil selon la revendication 2, **caractérisé en ce que** le dispositif de mesure (80, 81) est arrangé pour mesurer lesdits changements en ce qui concerne la distance en mesurant les changements d'épaisseur de ladite pièce à usiner ou desdites pièces à usiner (2, 3) dans ladite direction longitudinale, en combinaison avec la mesure desdits changements en ce qui concerne la distance, changements qui surviennent en direction verticale entre l'assemblage de soudage (12, 13) et la/les pièce(s) à usiner au cours du soudage.

10. Appareil selon la revendication 9, **caractérisé en ce que** le dispositif de mesure est constitué par un dispositif de mesure de l'épaisseur (80) et par une unité (81) pour mesurer et/ou enregistrer successivement les changements en ce qui concerne la distance entre l'assemblage de soudage 1213 et la/les pièce(s) à usiner (2, 3).

11. Appareil selon la revendication 10, **caractérisé en ce que** le dispositif de mesure de l'épaisseur (80) est arrangé en étant relié à l'assemblage de soudage (12, 13).

12. Appareil selon la revendication 11, **caractérisé en ce que** le dispositif de mesure de l'épaisseur est un dispositif de mesure à ultrasons (80).

13. Appareil selon la revendication 10, **caractérisé en ce que** le dispositif de mesure de l'épaisseur est arrangé en étant séparé de l'assemblage de soudage (12, 13).

14. Appareil selon l'une quelconque des revendications 10 à 13, **caractérisé en ce que** ladite unité est un moyen de mesure monté sur l'assemblage de soudage (12, 13), tel qu'un dispositif de mesure de la distance à laser.

15. Appareil selon l'une quelconque des revendications 10 à 13, **caractérisé en ce que** ladite unité est un moyen d'enregistrement (81) relié au dispositif de réglage de la hauteur (60), ledit moyen d'enregistrement étant arrangé pour suivre les faces supérieures des pièces à usiner (2, 3) ou la face supérieure de la pièce à usiner au cours de l'opération de soudage.

16. Appareil selon la revendication 15, **caractérisé en ce que** le moyen d'enregistrement est constitué d'un galet de guidage (81).

17. Appareil selon l'une quelconque des revendications 9 à 16, **caractérisé en ce que** le dispositif de mesure (94, 95) est relié au moyen de serrage susmentionné (5, 6).

18. Appareil selon la revendication 17, **caractérisé en ce que** le moyen de serrage (5, 6) et l'assemblage de soudage (12, 13) sont arrangés pour être portés par un support commun (91, 92, 93), le dispositif de mesure de l'épaisseur et ladite unité formant un dispositif de mesure commun tel qu'au moins un dispositif de détection de la position (94, 95).

19. Appareil selon l'une quelconque des revendications précédentes, **caractérisé en ce que** ledit dispositif règle la position de l'assemblage de soudage (12, 13) par rapport à la face supérieure de la table de fixation (7).
